# EUROPEAN PATENT SPECIFICATION

(11) **EP 3 006 124 B1**
(45) Date of publication and mention of the grant of the patent: **20.12.2017**
(21) Application number: 14188249.8
(22) Date of filing: 09.10.2014
(51) Int. Cl.: B23K 101/34, B23K 103/04, C22C 38/12, C22C 38/44, C22C 38/46, C22C 38/48, C22C 38/50, B23K 103/18, B23K 26/34, B23K 35/30, C22C 38/02, C22C 38/04, C22C 38/22, C22C 38/24, B23K 35/02

(54) **Work roll manufactured by laser cladding and method therefor**
Durch Laserplattieren hergestellte Arbeitswalze und Verfahren dafür
Cylindre de travail fabriqué par placage au laser et procédé associé

(43) Date of publication of application: 13.04.2016
(73) Proprietor: Centre de Recherches Métallurgiques asbl - Centrum voor Research in de Metallurgie vzw, 1000 Bruxelles (BE)
(72) Inventor: Walmag, Gisèle, 4130 Tilff (BE); Esser, Grégory, 4830 Limbourg (BE)
(74) Representative: Pronovem

(56) References cited:
- EP-A1- 0 070 773
- EP-A1- 0 533 929
- EP-A1- 0 665 068
- CN-A- 103 614 731
- CN-A- 104 087 866
- FR-A1- 2 767 725
- JP-A- H 108 211
- JP-A- 2013 176 778
- SCANDELLA F: "DEVELOPPEMENT D'UN ACIER RAPIDE POUR LE REVETEMENT DE CYLINDRES DE LAMINAGE A CHAUD", SOUDAGE ET TECHNIQUES CONNEXES, INSTITUT DE SOUDURE, PARIS, FR, vol. 64, no. 3-4, 1 March 2010 (2010-03-01), pages 35-46, XP001552836, ISSN: 0246-0963
- BRÜCKNER FRANK ET AL: "Innovations in laser cladding and direct metal deposition", HIGH POWER LASER MATERIALS PROCESSING: LASERS, BEAM DELIVERY, DIAGNOSTICS, AND APPLICATIONS, SPIE, 1000 20TH ST. BELLINGHAM WA 98225-6705 USA, vol. 8239, no. 1, 9 February 2012 (2012-02-09), pages 1-6, XP060001580, DOI: 10.1117/12.906706 [retrieved on 1901-01-01]

## Description

### Field of the Invention

The present invention is related to the field of manufacturing work rolls intended for hot and cold mills, and preferably intended for strip rolling mills. The invention is more specifically related to work rolls obtained by the laser-cladding method.

### Prior Art

In order to meet high productivity and surface quality requirements of their customers, manufacturers of work rolls for rolling mills are lead to explore different materials submitted to increasingly harsh specifications. Under normal hot operating conditions, the table of the working cylinder has to withstand wear and hot thermal fatigue induced by the periodicity of its fast cooling and reheating at each turn of the cylinder. Such cylinders, that are required to have a very tough and wear-resistant surface while having a ductile core cylinder, can be manufactured by various techniques, among which spin or centrifugal casting, which is the conventional method, laser cladding or powder metallurgy by hot isostatic pressing of a shell built up to a steel core.

In cold rolling, roll degradation mainly occurs due to abrasive wear leading to loss of roughness. For achieving adequate roughness retention and strip cleanliness, a hard chromium plating is applied. Today, HSS rolls are used with satisfactory results in roughness retention but strip cleanliness is still inadequate.

Laser cladding is a surface-processing technology involving the deposition of a material of different nature on a metal substrate using a laser beam. Cladding consumables are deposited in either wire or powder form transported by an inert gas, injected into the molten pool, either laterally or coaxially to the laser beam, melted and consolidated by use of the laser, in order to coat part of the substrate. It is often used to improve mechanical properties, to provide higher wear resistance, heat resistance or higher hardness or to increase corrosion resistance.

Work rolls for hot strip mills (HSM) are usually manufactured using the spin-casting method followed by a heat treatment. The roll is constituted by a cast or forged iron or steel core with an external shell of highly alloyed steel grade, which composition comprises high carbon, Mn, Si and elements generating carbides, such as W, Mo, V, Cr, Co, etc.

Document US 2002/0165634 A1 discloses a laser-assisted, direct metal deposition (DMD^{tm}), preferably in a closed-loop arrangement, used to fabricate designed articles and components such as molds and tools with improved properties. A laminate substrate or structure is provided having a surface onto which a layer of a material is deposited having the desired characteristic using the laser-assisted DMD process. In different embodiments, the substrate/layer combination may be tailored for improved wear resistance, thermal conductivity, density/hardness, corrosion and/or resistance to corrosion, oxidation or other desirable effects. Alternatively, the layer of material may be tailored to have a phase which is different from that of the substrate. In particular, the layer material itself may be chosen to promote a phase which is different from that of the substrate. To enhance throughput, the outer layer(s) of material may be fabricated using a robotic closed-loop DMD arrangement.

Document WO 2013/113853 A1 discloses a method for laser cladding a rotation symmetric steel rolling mill roll substrate with a wear and corrosion resistant metal coating made of at least two layers, a first nickel alloy coating layer as an intermediate layer and a second cobalt alloy coating layer as a top layer. The method comprises the steps of:
a) cleaning the substrate by machining the surface of the substrate;
b) rotating the substrate around its axis of rotational symmetry;
c) forming a melt pool on the surface of the rotating substrate by means of a laser beam and applying the first coating layer by feeding a first powder material into the melt pool, wherein the first powder material is fed into the melt pool coaxially with the laser beam;
d) forming a melt pool on the surface of the substrate provided with the first coating layer by means of the laser beam and applying the second coating layer by feeding a second powder material into the melt pool, wherein the second powder material is fed into the melt pool coaxially with the laser beam.

The invention also relates to a rolling mill roll steel substrate provided with such wear and corrosion resistant metal coatings.

Moreover, this document teaches that, in the top layer, the cobalt alloy comprises (in mass percentage) between 27 and 32% Cr, 4 to 6% W, 0.9 to 1.4% C, 1 to 2 % Fe, 1 to 3% Ni, up to 1% Mn, up to 1% Mo, up to 0.1% B, up to 0.01% O, up to 0.02% S, and balance Co and inevitable impurities; and that, in the intermediate layer, the nickel alloy comprises between 15 to 17% Mo, 14.5 to 16.5% Cr, 4 to 7% Fe, 3-4.5% W, up to 2% Mn, up to 0.1% C, up to 0.05% P, up to 0.02% S, up to 0.5% V and balance Ni and inevitable impurities.

This method with built-up intermediate layer allows to suppress constraints in the external layer, which otherwise would suffer cracks.

The cylinder axe used as a substrate is made of cast iron and the external layers have a total thickness of 1-2 mm.

Document EP 0 070 773 A1 relates to the manufacture of metal parts whose heart and surface should have different characteristics. It first provides a method of manufacturing a composite metal part by coating or reloading of a metal core of low-alloy structural steel, by means of a harder metal layer consisting of a high speed steel, chromium-tungsten steel, chromium-molybdenum steel or chromium steel combined with several elements such as : tungsten, molybdenum, vanadium, cobalt, this process being characterized in that the high speed steel has a hardness greater than 57 Rockwell C, in that the low-alloyed steel which constitutes the metal core is selected so as to be compatible with said high speed steel, in that said steel is exclusively provided in the form of a pre-alloyed powder, and in that the coating or the reloading of the core by this powder is achieved by means of one of the following group of welding processes : by means of a welding torch with transferred arc plasma, or semi-transferred, by means of a laser welding torch, the coating or weld recharging operation being followed by a heat treatment.

### Aims of the Invention

The present invention aims to provide work rolls, particularly intended for hot rolling mills, which exhibit improved resistance to thermal fatigue as well as to surface degradation.

The invention also aims to provide work rolls having a coating with very high quality without cracks or porosities.

### Summary of the Invention

The present invention relates to a method for manufacturing a rolling mill roll, preferably a hot rolling mill roll, by laser cladding a reusable steel axe substrate having a rotational symmetry axis with a metal coating external layer, said metal coating external layer having a work tool steel composition, comprising the steps of :
- rotating the reusable substrate around its axis of rotational symmetry;
- effecting a laser cladding on the rotating substrate, by forming a melt pool on the surface of the rotating substrate by means of a laser beam and affixing the coating layer by feeding a powder material into the laser-induced melt pool,
- submitting the coated substrate to a thermal treatment made of a tempering treatment comprising a heating up to a temperature in the range 500-650°C followed by a holding at this temperature during a time comprised between 2 and 5 hours, in order to soften martensite and precipitate carbides;
   wherein the composition for said metal coating external layer is consisting of 0.5-3.5% C, 2-18% Cr, 0.5-7% Mo, 0.5-8% V, 0.2-5% W, 0-5% Nb, 0-1% Ti, 0.5-1% Mn, 0.2-3% Si and 0-3% Ni, the rest being Fe and inevitable impurities;
   wherein a preheating of the substrate is performed, thanks to a coating head combining induction heating with laser cladding process;
   wherein the cladding rate is in the range from 2.35 kg/h to 18 kg/h, and
   wherein said external coating layer is made of multiple added coating sublayers and has a total thickness comprised between 1 and 30 mm, the thickness of each single external coating sublayer being comprised between 0.1 and 2.5 mm.

According to preferred embodiments of the invention, the method is further limited by one or a suitable combination of the following features:
- the composition for said metal coating external layer is consisting of 1-3 % C, 4-18% Cr, 0.5-7% Mo, 0.5-8% V, 0.2-5% W, 1-5% Nb, 0-1% Ti, 0.5-1% Mn and 0.2-0.5% Si, the rest being Fe and inevitable impurities;
- the composition for said metal coating external layer is consisting of 1-3.5% C, 2-7% Cr, 1-7% Mo, 1-8% V, 0.2-5% W, 0-5% Nb, 0.5-1% Mn, 0.2-3% Si and 1-3% Ni, the rest being Fe and inevitable impurities;
- the composition for said metal coating external layer is consisting of 0.5-2% C, 5-13% Cr, 0.5-5% Mo, 0.5-5% V, 0.2-2% W, 0.5-1% Mn and 0.2-0.5% Si, the rest being Fe and inevitable impurities;
- the composition of the steel axe consists of 0.2-0.5% C and 0.5-5% Cr, 0-1 % Mo, 0-1% Mn and 0-0.4% Si, the rest being Fe and the inevitable impurities;
- the composition of the steel axe contains 0.4% C and 1-2% Cr;
- the method comprises a preliminary step of preparing the reusable substrate by cleaning or machining the surface of the reusable substrate.

The present invention relates to a method for manufacturing a rolling mill roll.

### Brief Description of the Drawings

Figure 1 represents the microstructure of laser-clad specimens obtained according to the present invention (left) compared with specimens obtained by the prior-art spin-casting method (right).
Figure 2 represents the microstructure of laser-clad specimens obtained according to the present invention (bottom) compared with specimens obtained by the prior-art powder metallurgy method (top).
Figure 3A shows thermal fatigue cracks on micrographs of laser-clad HSS (top left), spun-cast HSS (top right) and laser-clad high-carbide steels (bottom) samples, respectively after work roll degradation tests.

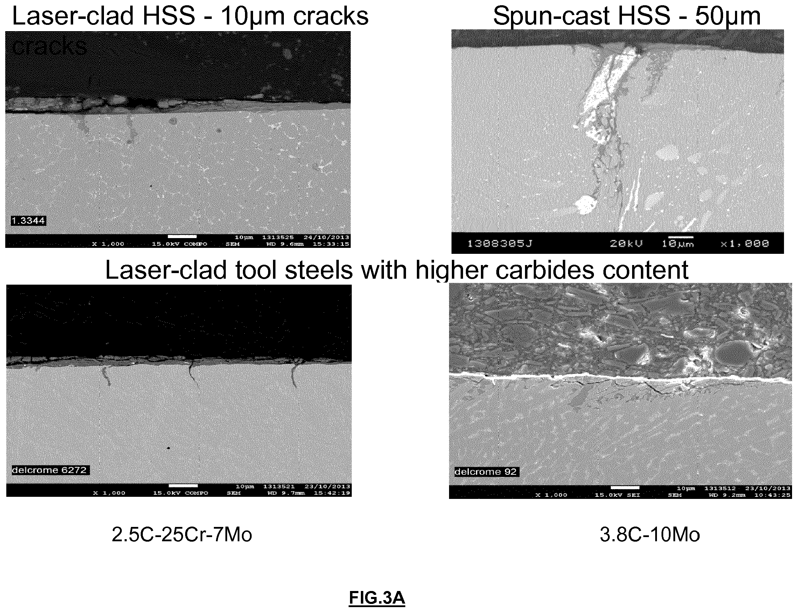

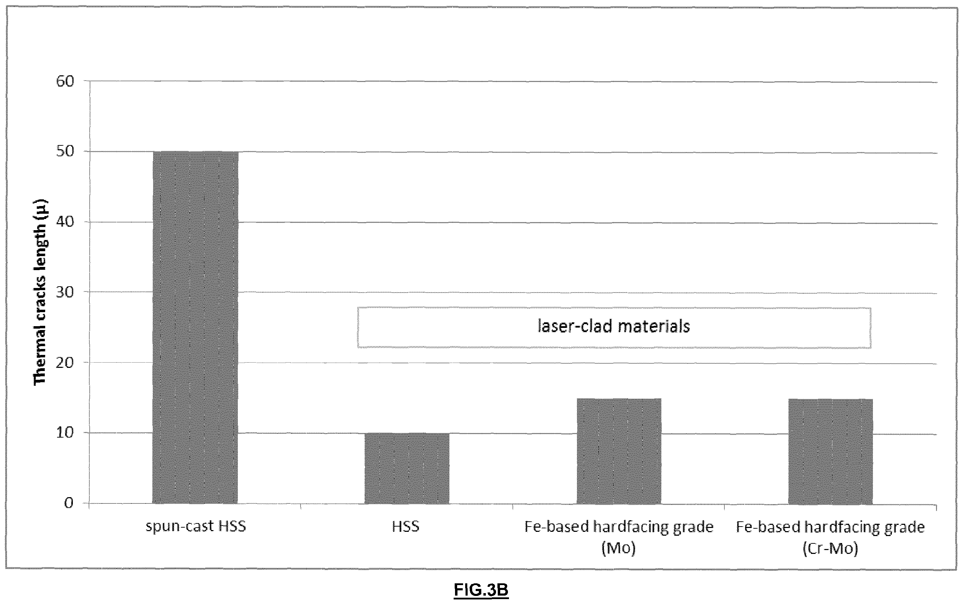

Figure 3.B represents a diagram corresponding to Fig.3A showing compared thermal cracks length of spun-cast and different laser-clad samples.

### Description of Preferred Embodiments of the Invention

The present invention relates to a new laser-cladding method for coating a roll having a steel axe (or shaft or spindle) substrate with a deposition of a "layer" of hot or cold work tool steel, which can be obtained from the deposit of successive sublayers. Tool steels used are similar to HSS WR grades and/or with higher carbide content.

The composition of the steel axe comprises 0.2-0.5% C and 0.5 - 5% Cr, 0-1% Mo, 0-1% Mn and 0-0.4% Si, with preferably 0.4% C and 1-2% Cr, the rest being Fe and the inevitable impurities.

The deposited layer typically has a work tool steel composition depending on the type of cylinder, whether it is a hot work roll or a cold work roll.

According to the invention, the composition of the top layer for a work roll consists of 0.5-3.5% C, 2-18% Cr, 0.5-7% Mo, 0.5-8% V, 0.2-5% W, 0-5% Nb, 0-1% Ti, 0.5-1% Mn, 0.2-3% Si and 0-3% Ni, the rest being Fe and the inevitable impurities.

According to a first preferred embodiment of the invention, the composition of the top layer for the manufacturing of a hot work roll is consisting of 1-3 % C, 4-18% Cr, 0.5-7% Mo, 0.5-8% V, 0.2-5% W, 1-5% Nb, 0-1% Ti, 0.5-1% Mn and 0.2-0.5% Si, the rest being Fe and inevitable impurities.

According to a second preferred embodiment of the invention, the composition of the top layer for the manufacturing of a hot work roll is consisting of 1-3.5% C, 2-7% Cr, 1-7% Mo, 1-8% V and 0.2-5% W, 0-5% Nb, 0.5-1% Mn, 0.2-3% Si and 1-3% Ni, the rest being Fe and inevitable impurities.

According to a third preferred embodiment of the invention, the composition of the top layer for the manufacturing of a cold work roll is consisting of 0.5-2% C, 5-13% Cr, 0.5-5% Mo, 0.5-5% V, 0.2-5% W, 0.5-1% Mn and 0.2-0.5% Si, the rest being Fe and the inevitable impurities.

The characteristics of the laser-cladding method used in the present invention are the following:
- high metallurgical bonding;
- low or no porosity and benefit of a high cooling rate leading to very fine microstructure;
- homogeneous composition;
- coating thickness : 0.1-2.5 mm per (sub)layer;
- thicker coatings obtained by adding multiple layers, the thickness of the total external layer being comprised between 1 and 30 mm, and preferably about 20 mm;
- cladding rate from 2.35 kg/h to 18 kg/h with special heads (combination of induction heating with laser-cladding process);
- pre-heating of substrate when necessary;
- post-thermal treatment (e.g. tempering).

For example, with a composition of 1% C, 4% Cr, 5% Mo, 3% V and 6.5% W, results showed that the quality of the bonding zone is very satisfactory in terms of cracks and porosities.

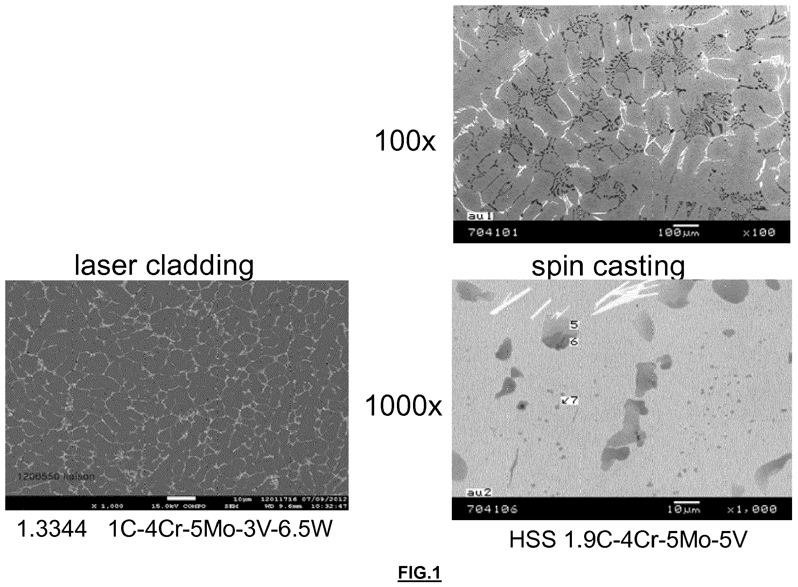

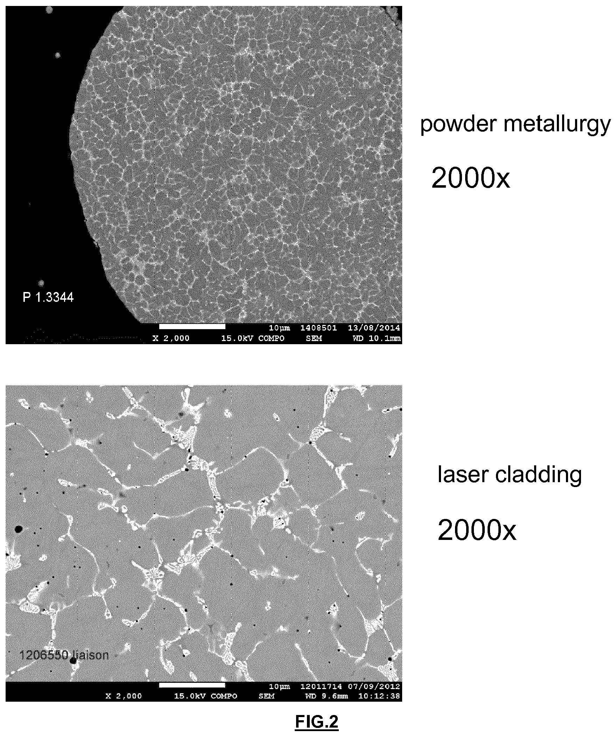

One of the advantages is that the coating achieved by laser cladding in the present invention exhibits a very fine microstructure (10-15 µm or ten times finer than a spun-cast HSS tool steel (see Fig.1) and even finer than a CPC (continuous pour cladding) - obtained steel - 30-150 µm (see Scandella F.; Développement d'un acier rapide pour le revêtement de cylindres de laminage à chaud Soudage et Technique Connexes, Mars-Avril 2010, pp. 35-46)); see also comparison with powder metallurgy steels : two times coarser, Fig.2). The microstructure is characteristic of tempered martensite with carbides (M₂C, MC and M₂₃C₆). The thermal treatment necessary for softening the martensite and precipitate the carbides is made at 500-650°C.

Laboratory tests of work roll degradation on a three-disk wear machine simulating the rolling conditions of the early stands of a HSM are shown on Figs.3A and 3B. Cracks in laser-clad HSS were 3 to 5 times shorter than in spun-cast HSS.

In conclusion, top layer tool steel material (HSS) obtained by the laser-cladding method of the present invention exhibits an improved behaviour in surface degradation, a very good adherence to the substrate, a refined microstructure carbides network size (10x finer than in spin-casting, only 2x coarser than in powder metallurgy). In the case of finishing work rolls, the method typically provides a laser-cladding 20mm thick shell of tool steel on reusable steel axe, similar roll life as with prior art but strongly increased roll campaign (5X) thus increased productivity, higher Young modulus (130-170 GPa cast iron vs 200-230 GPa steel) and less roll flattening and bending, reduced variation of roll diameter and tool steel materials with very similar machinability as in prior art.

Moreover in the method according to the invention, the thermal treatment is shortened as compared with the method of prior art, thus economizing energy and more environment-friendly.

## Claims

1. A method for manufacturing a rolling mill roll by laser cladding a reusable steel axe substrate having a rotational symmetry axis with a metal coating external layer, said metal coating external layer having a work tool steel composition, comprising the steps of :
- rotating the reusable substrate around its axis of rotational symmetry;
- effecting a laser cladding on the rotating substrate, by forming a melt pool on the surface of the rotating substrate by means of a laser beam and affixing the coating layer by feeding a powder material into the laser-induced melt pool;
- submitting the coated substrate to a thermal treatment made of a tempering treatment comprising a heating up to a temperature in the range 500-650°C followed by a holding at this temperature during a time comprised between 2 and 5 hours, in order to soften martensite and precipitate carbides;
wherein the composition for said metal coating external layer is consisting of 0.5-3.5% C, 2-18% Cr, 0.5-7% Mo, 0.5-8% V, 0.2-5% W, 0-5% Nb, 0-1% Ti, 0.5-1% Mn, 0.2-3% Si and 0-3% Ni, the rest being Fe and inevitable impurities; wherein a preheating of the substrate is performed, thanks to a coating head combining induction heating with laser cladding process;
wherein the cladding rate is in the range from 2.35 kg/h to 18 kg/h; and wherein said external coating layer is made of multiple added coated sublayers and has a total thickness comprised between 1 and 30 mm, the thickness of each single external coating sublayer being comprised between 0.1 and 2.5 mm.

2. The method of Claim 1, wherein the composition for said metal coating external layer is consisting of 1-3 % C, 4-18% Cr, 0.5-7% Mo, 0.5-8% V, 0.2-5% W, 1-5% Nb, 0-1% Ti, 0.5-1% Mn and 0.2-0.5% Si, the rest being Fe and inevitable impurities.

3. The method of Claim 1, wherein the composition for said metal coating external layer is consisting of 1-3.5% C, 2-7% Cr, 1-7% Mo, 1-8% V, 0.2-5% W, 0-5% Nb, 0.5-1% Mn, 0.2-3% Si and 1-3% Ni, the rest being Fe and inevitable impurities.

4. The method of Claim 1, wherein the composition for said metal coating external layer is consisting of 0.5-2% C, 5-13% Cr, 0.5-5% Mo, 0.5-5% V, 0.2-2% W, 0.5-1% Mn and 0.2-0.5% Si, the rest being Fe and inevitable impurities.

5. The method of Claim 1, wherein the composition of the steel axe comprises 0.2-0.5% C and 0.5-5% Cr, 0-1% Mo, 0-1% Mn and 0-0.4% Si, the rest being Fe and the inevitable impurities.

6. The method of Claim 5, wherein the composition of the steel axe comprises 0.4% C and 1-2% Cr.

7. The method of Claim 1, wherein it comprises a preliminary step of preparing the reusable substrate by cleaning or machining the surface of the reusable substrate.

8. The method of Claim 1, wherein it is a method for manufacturing a hot rolling mill roll.

## Patentansprüche

1. Verfahren zum Herstellen einer Walzenmühlenwalze durch Laserauftragsschweißen eines wiederverwendbaren Stahlaxtsubstrats mit einer Drehsymmetrieachse mit einer Metallbeschichtungsaußenschicht, wobei die Metallbeschichtungsaußenschicht eine Arbeitsstahlzusammensetzung aufweist, das die Schritte umfasst:
- Drehen des wiederwendbaren Substrats um dessen Drehsymmetrieachse;
- Umsetzen eines Laserauftragsschweißens auf dem Drehsubstrat durch Bilden eines Schmelzepools auf der Oberfläche des Drehsubstrats mithilfe eines Laserstrahls und Fixieren der Beschichtungsschicht durch Zuführen eines Pulvermaterials in den laserinduzierten Schmelzepool;
- Unterziehen des beschichteten Substrats einer Wärmebehandlung in Form einer Temperbehandlung, die das Erhitzen bis auf eine Temperatur im Bereich von 500 bis 650 °C umfasst, worauf das Halten auf dieser Temperatur während eines Zeitraums zwischen 2 und 5 Stunden folgt, um Martensit zu erweichen und Carbide auszufällen;
wobei die Zusammensetzung für die Metallbeschichtungsaußenschicht aus 0,5 bis 3,5 % C, 2 bis 18 % Cr, 0,5 bis 7 % Mo, 0,5 bis 8 % V, 0,2 bis 5 % W, 0 bis 5 % Nb, 0 bis 1 % Ti, 0,5 bis 1 % Mn, 0,2 bis 3 % Si und 0 bis 3 % Ni besteht, wobei der Rest Fe und unvermeidbare Verunreinigungen ist;
wobei ein Vorerhitzen des Substrats durchgeführt wird, mit einem Auftragskopf, der Induktionserhitzen mit einem Laserauftragsscheißprozess kombiniert;
wobei die Auftragsschweißrate im Bereich von 2,35 kg/h bis 18 kg/h liegt; und
wobei die Beschichtungsaußenschicht aus mehreren hinzugefügten beschichteten Subschichten besteht und eine Gesamtdicke zwischen 1 und 30 mm aufweist, wobei die Dicke jeder einzelnen Beschichtungsaußensubschicht zwischen 0,1 und 2,5 mm beträgt.

2. Verfahren nach Anspruch 1, wobei die Zusammensetzung für die Metallbeschichtungsaußenschicht aus 1 bis 3 % C, 4 bis 18 % Cr, 0,5 bis 7 % Mo, 0,5 bis 8 % V, 0,2 bis 5 % W, 1 bis 5 % Nb, 0 bis 1 % Ti, 0,5 bis 1 % Mn und 0,2 bis 0,5 % Si besteht, wobei der Rest Fe und unvermeidbare Verunreinigungen ist.

3. Verfahren nach Anspruch 1, wobei die Zusammensetzung für die Metallbeschichtungsaußenschicht aus 1 bis 3,5 % C, 2 bis 7 % Cr, 1 bis 7 % Mo, 1 bis 8 % V, 0,2 bis 5 % W, 0 bis 5 % Nb, 0,5 bis 1 % Mn, 0,2 bis 3 % Si und 1 bis 3 % Ni besteht, wobei der Rest Fe und unvermeidbare Verunreinigungen ist.

4. Verfahren nach Anspruch 1, wobei die Zusammensetzung für die Metallbeschichtungsaußenschicht aus 0,5 bis 2 % C, 5 bis 13 % Cr, 0,5 bis 5 % Mo, 0,5 bis 5 % V, 0,2 bis 2 % W, 0,5 bis 1 % Mn und 0,2 bis 0,5 % Si besteht, wobei der Rest Fe und unvermeidbare Verunreinigungen ist.

5. Verfahren nach Anspruch 1, wobei die Zusammensetzung der Stahlaxt 0,2 bis 0,5 % C und 0,5 bis 5 % Cr, 0 bis 1 % Mo, 0 bis 1 % Mn und 0 bis 0,4 % Si umfasst, wobei der Rest Fe und die unvermeidbaren Verunreinigungen ist.

6. Verfahren nach Anspruch 5, wobei die Zusammensetzung der Stahlaxt 0,4 % C und 1 bis 2 % Cr umfasst.

7. Verfahren nach Anspruch 1, wobei es einen Vorabschritt des Vorbereitens des wiederverwendbaren Substrats durch Reinigen oder maschinelles Bearbeiten der Oberfläche des wiederverwenden Substrats umfasst.

8. Verfahren nach Anspruch 1, wobei es ein Verfahren zum Herstellen einer Warmwalzenmühlenwalze ist.

## Revendications

1. Procédé de fabrication d'un rouleau de laminoir par revêtement au laser d'un substrat de hache en acier réutilisable ayant un axe de symétrie de rotation avec une couche externe de revêtement métallique, ladite couche externe de revêtement métallique ayant une composition d'acier d'outil de travail, comprenant les étapes de :
- rotation du substrat réutilisable autour de son axe de symétrie de rotation ;
- réalisation d'un revêtement au laser sur le substrat en rotation, en formant un bain de fusion sur la surface du substrat en rotation à l'aide d'un faisceau laser, et fixation de la couche de revêtement par introduction d'un matériau en poudre dans le bain de fusion induit par laser ;
- soumission du substrat revêtu à un traitement thermique constitué d'un traitement de revenu comprenant un chauffage jusqu'à une température dans la plage de 500 à 650 °C suivi d'un maintien à cette température pendant une durée comprise entre 2 et 5 heures, afin de ramollir la martensite et de précipiter les carbures ;
dans lequel la composition pour ladite couche externe de revêtement métallique est constituée de 0,5 à 3,5 % de C, de 2 à 18 % de Cr, de 0,5 à 7 % de Mo, de 0,5 à 8 % de V, de 0,2 à 5 % de W, de 0 à 5 % de Nb, de 0 à 1 % de Ti, de 0,5 à 1 % de Mn, de 0,2 à 3 % de Si et de 0 à 3 % de Ni, le reste étant du Fe et des impuretés inévitables ;
dans lequel un préchauffage du substrat est réalisé, grâce à une tête d'enduction en associant un chauffage par induction au procédé de revêtement au laser ;
dans lequel le taux de revêtement se situe dans la plage de 2,35 kg/h à 18 kg/h ; et dans lequel ladite couche de revêtement externe est faite de multiples sous-couches revêtues ajoutées et a une épaisseur totale comprise entre 1 et 30 mm, l'épaisseur de chaque sous-couche de revêtement externe individuelle étant comprise entre 0,1 et 2,5 mm.

2. Procédé selon la revendication 1, dans lequel la composition pour ladite couche externe de revêtement métallique est constituée de 1 à 3 % de C, de 4 à 18 % de Cr, de 0,5 à 7 % de Mo, de 0,5 à 8 % de V, de 0,2 à 5 % de W, de 1 à 5 % de Nb, de 0 à 1 % de Ti, de 0,5 à 1 % de Mn et de 0,2 à 0,5 % de Si, le reste étant du Fe et des impuretés inévitables.

3. Procédé selon la revendication 1, dans lequel la composition pour ladite couche externe de revêtement métallique est constituée de 1 à 3,5 % de C, de 2 à 7 % de Cr, de 1 à 7 % de Mo, de 1 à 8 % de V, de 0,2 à 5 % de W, de 0 à 5 % de Nb, de 0,5 à 1 % de Mn, de 0,2 à 3 % de Si et de 1 à 3 % de Ni, le reste étant du Fe et des impuretés inévitables.

4. Procédé selon la revendication 1, dans lequel la composition pour ladite couche externe de revêtement métallique est constituée de 0,5 à 2 % de C, de 5 à 13 % de Cr, de 0,5 à 5 % de Mo, de 0,5 à 5 % de V, de 0,2 à 2 % de W, de 0,5 à 1 % de Mn et de 0,2 à 0,5 % de Si, le reste étant du Fe et des impuretés inévitables.

5. Procédé selon la revendication 1, dans lequel la composition de la hache en acier comprend de 0,2 à 0,5 % de C et de 0,5 à 5 % de Cr, de 0 à 1 % de Mo, de 0 à 1 % de Mn et de 0 à 0,4 % de Si, le reste étant le Fe et les impuretés inévitables.

6. Procédé selon la revendication 5, dans lequel la composition de la hache en acier comprend 0,4 % de C et de 1 à 2 % de Cr.

7. Procédé selon la revendication 1, dans lequel il comprend une étape préliminaire de préparation du substrat réutilisable par nettoyage ou usinage de la surface du substrat réutilisable.

8. Procédé selon la revendication 1, dans lequel il s'agit d'un procédé de fabrication d'un rouleau de laminoir à chaud.
